# EUROPEAN PATENT APPLICATION

(11) **EP 1 731 479 A1**
(43) Date of publication of application: **13.12.2006**
(21) Application number: 05076275.6
(22) Date of filing: 01.06.2005
(51) Int. Cl.: B67D 1/00

(54) **Dispenser with two stage cooling and carbonator**

(71) Applicant: MDS Global Holding Ltd., Gzira GZR 03 (MT)
(72) Inventor: WILLEMSEN, Robert, 3571 ND UTRECHT (NL)
(74) Representative: Houben, Christiaan Hein Willem Frans

(57) **Abstract**

The invention relates to dispensing of a cabonised fluid. In particular the invention relates to a fluid cooling system comprising a cooling tank (2) filled with a heat transfer medium and comprising an evaporator conduit (8) positioned within the cooling tank (2) for withdrawing heat from the heat transfer medium. The coolings system has a primary cooling conduit (12) arranged in the cooling tank (2). A carbonator vessel (11) is provided for carbonating fluid, the carbonator vessel (11) is connected to the primary cooling conduit (12) and has an outlet for carbonated fluid. The cooling system comprises a secondary cooling conduit (13) which is connected to the outlet of the carbonator vessel (11) and is adapted to cool the carbonated water flowing out from the carbonator vessel (11). The secondary cooling conduit is connected to dispensing means of carbonated water. This additional cooling ensures a better retaining of CO₂ in the carbonised fluid.

## Description

A first aspect of the present invention relates to a fluid cooling system comprising:
- a cooling tank filled with a heat transfer medium, preferably water;
- an evaporator positioned within the cooling tank for withdrawing heat from the heat transfer medium;
- a primary cooling conduit with an inlet connected to a fluid supply and an outlet, which primary cooling conduit is arranged in the cooling tank;
- a carbonator for carbonating fluid, the carbonator having an inlet connected to the outlet of the primary cooling conduit and having an outlet for carbonated fluid.

Such a fluid cooling system is known from the prior art and can be used for dispensing systems for carbonated drinks. A system of the type described above is adapted to supply cooled fluid to the carbonator, which is generally preferred because the carbonation process runs better at low temperatures. For the same reason often also the carbonator itself is positioned in a cooling tank.

In US 2,750,076 for example, a cooling system is disclosed comprising a liquid retaining tank with an evaporator coil positioned within the tank adjacent the tank walls. The known system also comprises a second coil positioned within the tank and within the limits of the evaporator coil, which second coil is adapted to be connected to a fresh water supply. The second coil serves as a heat exchanger for cooling fresh water. Furthermore, the known system comprise a carbonator tank which is connected to the second coil. The carbonator is positioned centrally in the tank within the limits of the second coil.

It is an object of the present invention to provide an improved coolings system of the abovementioned type.

This object is achieved by a fluid cooling system according to the preamble of claim 1, wherein the cooling system comprises a secondary cooling conduit having an inlet connected to the outlet of the carbonator and having an outlet connected to dispensing means of carbonated water, which secondary coooling conduit is adapted to cool the carbonated water flowing out from the carbonator.

According to the invention the fluid is cooled before it is supplied to the carbonator. Downstream of the carbonator also the carbonated fluid is cooled by the secondary cooling conduit. This has the advantageous effect that the carbonated fluid retains better the carbon dioxide brought into it by the carbonator. If applied in a drink dispensing apparatus this results in better carbonated drinks.

In a preferred embodiment the secondary cooling conduit is arranged in the cooling tank, such that carbonised and non-carbonised water can be cooled within the same bath of heat transfer medium. Thus a compact structure can be achieved.

In another preferred embodiment the carbonator vessel is arranged in the cooling tank such that the carbonator vessel and its content can be cooled by the same bath of heat transfer medium contained in the cooling tank that is used to cool the water to be supplied to the carbonator vessel in the primary cooling conduit. This leads to a more compact structure of the cooling device. Also the cooling of the carbonator vessel improves the carbonisation process.

Preferably the secondary cooling conduit is shaped as a cooling coil, which extends around the carbonator vessel, which leads to a more compact design.

In another preferred embodiment the primary cooling conduit is shaped as a coil and the evaporation conduit is also shaped as coil, which evaporator coil and primary cooling coil are arranged concentric with respect to each other. This results in a compact design. Preferably the evaporator coil is positioned within the primary cooling coil.

In a further preferred embodiment, the carbonator vessel is arranged in the cooling tank above the evaporator coil and the primary cooling coil.

The cooling tank can comprise at least two chambers separated by a separation wall, which chambers are in fluid communication with each other, such that heat transfer medium can circulate between the two chambers.

In a preferred embodiment an inner chamber and an outer chamber are situated concentrically with respect to each other and separated by a substantially tubular separation wall which is placed in an upright fashion in the cooling tank.

In a especially preferred embodiment the evaporator conduit is disposed within the inner chamber and the primary cooling conduit and secondary cooling conduit are disposed within the outer chamber. This structure leads to a better circulation of the heat transfer medium, which is preferably water, and thus to a better heat exchanging process within the cooling system. A lower part of the separation wall that surrounds the evaporator coil will delimit the growth of an ice bank on the outer side of said coil. The carbonator vessel can be disposed within the inner chamber as well.

To enhance the circulation of the heat transfer medium a circulation means, preferably a circulation pump can be provided in the cooling system.

A second aspect of the present invention relates to a valve assembly for dispensing a carbonated fluid, comprising a valve chamber with an inlet opening associated with a fluid feed passage, and with an outlet opening associated with a fluid discharge passage, a valve seat around the outlet opening, and a valve body moveable between an opened position in which it is spaced from the valve seat and a closed position in which it cooperates with the valve seat so as to seal off the outlet opening.

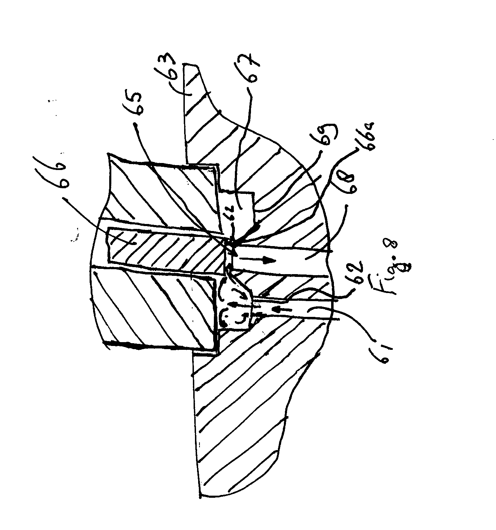

Such a valve assembly is known. In Fig. 8 is shown a known valve assembly with an inlet opening and an outlet opening which both face upwardly. In practice this known valve assembly is not satisfactory when used with carbonised fluid, because the carbonisation level of the fluid is substantially decreased therein.

The object of this second aspect of the invention is to provide an improved valve assembly of the abovementioned type.

This object is achieved by a valve assembly according to the preamble of claim 23, wherein the valve chamber has a round circumferential chamber wall, in which the inlet opening is arranged in a flush manner such that in operation a flow of fluid enters the valve chamber substantially tangential with respect to the inside of said chamber wall.

In dispensing carbonated beverages it is generally desired to retain as much carbon dioxide within the carbonised fluid. The arrangement of the inlet opening according to the invention achieves that the fluid flow is less disturbed in the chamber. This is expedient because less disturbation of the flow results in general in less foaming and degassing of the carbonised fluid. Thus, after dispensing, a fluid with a higher carbonisation level results than was achievable before.

Preferred embodiments of the second aspect of the invention are described in the dependent claims 24-31.

The invention also relates to a drink dispensing apparatus which is provided with cooling system according to the first aspect of the invention and/or a valve assembly according to the second aspect of the invention.

The invention will become more apparent from the following description with reference to the accompanying drawing, in which:
Fig. 1 shows a sectional view of a preferred embodiment of a cooling system according to a first aspect of the invention,
Fig. 2 shows an elevational view from above of the cooling system of Fig. 1,
Fig. 3 shows a view in perspective of a preferred embodiment of a valve assembly according to a second aspect of the invention,
Fig. 4 shows a cross sectional view of the valve assembly according to a cross sectional plane I in Fig. 3 with the valve assembly in an opened state,
Fig. 5 shows the same cross sectional view as Fig. 4 with the valve assembly in a closed state,
Fig. 6 shows a cross sectional view of the valve assembly according to a cross sectional plane II in Fig. 3 with the valve assembly in an opened state,
Fig. 7 shows a perspective view of a lower part of the valve assembly, and
Fig. 8 shows a cross sectional view of a valve assembly according to the prior art.

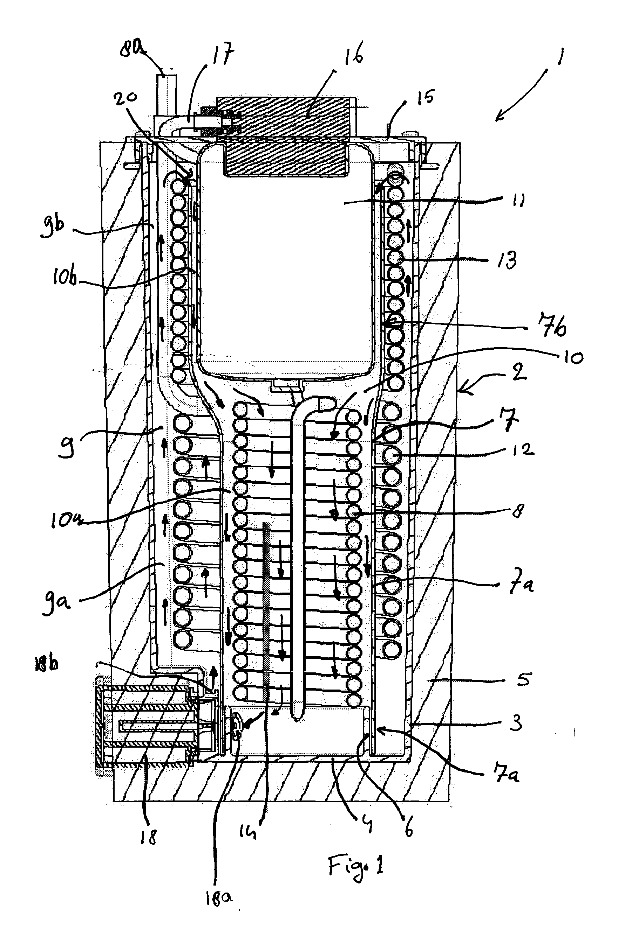

In Fig. 1 a cooling system is shown which generally is indicated by reference numeral 1. Such a cooling system is advantageously used in or with a drink dispensing machine.

The cooling system 1 comprises a cooling tank 2 with preferably a rectangular cross section. When the cooling system is built in in a beverage dispensing device or another device, there is, due to a desire to build compact devices, usually a limited space available for mounting the cooling system. The rectangular cross section provides compared to a round shape with the same height for a greater volume, which results in a better cooling capacity given an available amount of space in the dispensing device. The cooling tank 2 has an outer wall 3 and a bottom 4 which on the outside are provided with a thermally insulating layer 5. On the bottom is provided a support 6 extending upwardly from the bottom 4.

Within the housing is disposed a subtantially tubular separation wall 7, which at its lower end is in contact with the bottom 4. The support 6 is preferably ring shaped and formed integrally with the bottom 4. In a mounted state the ring shaped support 6 is inserted inside a lower part 7a of the separation wall 7. The separation wall 7 preferably has an upper wall part 7b with a greater diameter than the lower wall part 7a. The cooling tank 2 can be filled with a heat transfer fluid, preferably water. The separation wall 7 divides the inside of the cooling tank 2 in an outer cooling chamber 9 and an inner cooling chamber 10.

A coil shaped evaporator conduit 8 of an evaporator device is disposed within a lower part 10a of the inner cooling chamber 10. Above the evaporator coil 8 at the level of the upper part 7b of the separation wall 7 a carbonator vessel 11 is arranged within an upper part 10b of the inner cooling chamber 10.

Within a lower part 9a of the outer cooling chamber 9 a preferably coil shaped primary cooling conduit 12 is disposed. The windings of the primary cooling coil 12 surround at least partly the lower wall part 7a of the separation wall 7 and are spaced therefrom. Within an upper part 9b of the outer cooling chamber 9 a preferably coil shaped secondary cooling conduit 13 is arranged. The windings of the secondary cooling coil surround the upper wall part 7b of the separation wall 7. The cooling water in the tank 2 has the lowest temperature at the lower side of the tank 2. The circulating cooling water in the cooling tank 2 will generally flow via a passage and/or a pump at the lower side from the inner chamber 10, where it is in contact with the ice bank to the outer chamber 9 and then move upwardly. The primary cooling conduit 12 is thus surrounded by the coolest water, which is advantageous, because the most thermal energy has to be withdrwan from the generally relatively warm fresh water coming from the water supply. The secondary cooling conduit 13 is surrounded by cooling water with a higher temperature, but still cold enough for additionaly cooling the already cooled carbonised water. The proposed structure leads thus to an efficient transfer of thermal energy, which has the advantageous effect that the cooling conduits 12, 13 can be made less long which makes it possible to achieve a more compact design of the coolings system.

The evaporator coil 8 can be connected to a standard refrigeration system through which a preferably standard cooling agent is circulated. In the preferred embodiment the cooling tank 2 is filled with cooling water. By operation of the refrigeration system an ice bank can be created within the inner chamber 10 on the outside and the inside of the evaporator coil 8. The lower part 7a of the separation wall 7 delimits the thickness of the ice bank on the outside of the evaporator coil 8. This ensures that enough space is available between the ice bank and the primary cooling coil 12, through which the cooling water in the cooling tank 2 can circulate, which is expedient for a good heat transfer between the cooling water and the water flowing through the primary cooling coil 12. By means of a sensor 14 the thickness of the ice bank can be determined. The sensor 14 is connected to a control system (not shown) of the refrigeration system. The control system controls the thickness of the ice bank such that it does not grow too thick, in which case a sufficient circulation flow of water in the cooling tank 2 would be obstructed.

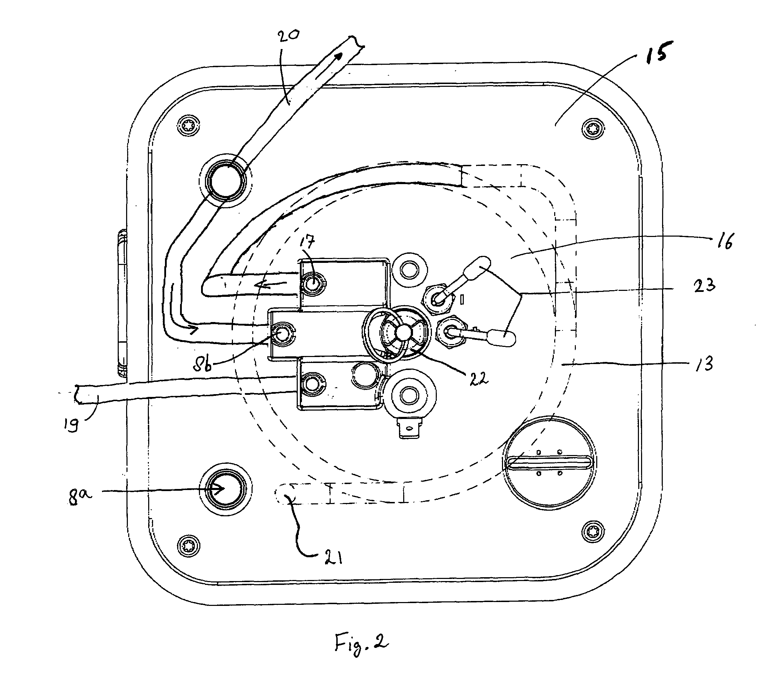

The primary cooling coil 8 has an inlet 8a which is connected to a water supply and an outlet 8b which is connected to a carbonator vessel 11 at the carbonator head 16 as can be seen in Fig. 2. The carbonator vessel 11 can be any suitable commercially available carbonator vessel. In Fig. 1 can be seen that a lid 15 is placed on top of the cooling tank 2 so as to seal off the inside. The lid 15 is provided with a carbonator head 16 to seal of the upper side of the carbonator vessel 11 and which is provided with connections for fluid and gas lines as well as a safety valve 22 and electrodes 23.

A bottle or other container filled with carbon dioxide (CO₂) gas is coupled to the carbonator vessel 11 via a CO₂ feeding line 19 for supplying carbon dioxide to be mixed with the water in the vessel 11. In the preferred embodiment the primary coil 8 has a branch 20 (see Fig. 2), preferably near the connection with the carbonation vessel 11. The branch is connected to a dispensing line (not shown)for cooled water.

The secondary cooling coil 13 has an inlet 17 which is connected with the carbonator vessel 11 at the carbonator head 16. The outlet 21 of the secondary coil 13 is connected to a dispensing line (not shown) for cooled carbonated water.

In the lower region of the tank 2 a circulation pump 18 is arranged. The circulation pump 18 is connected to the inner chamber 10 at an pump inlet 18a at the level of the ring shaped support 6. The circulation pump 18 is connected with the outer chamber 9 at the pump outlet 18b. In operation the pump 18 withdraws water from the inner chamber 10, in which the evaporator coil 8 is disposed, and pump it into the outer chamber 9 or vice versa. Preferably the pump 18 is a continuously operating pump.

Between the lid 15 and the upper end of the separation wall 7 a passage 20 is present which allows a water flow between the outer chamber 9 and the inner chamber 10.

As mentioned before the cooling system is preferably used with a beverage dispensing machine with which carbonated and non-carbonated cooled drinks can be served. To this end the beverage dispensing machine has a dispensing line for carbonated water and a dispensing line for non-carbonated water. The carbonated and non-carbonated water can be mixed with a flavouring constituent, e.g. a syrup, for the preparation of soda drinks and the like.

When the beverage dispensing apparatus is in use, water can dispensed from the carbonated water dispensing line. This carbonated water is supplied from the carbonator vessel 11 via the secondary coil 13 to the dispensing line. The water flowing through the secondary cooling coil 13 from the carbonator vessel 11 to the dispensing line is cooled by the heat exchanging between the carbonised water inside the coil 13 and the water in the upper part 9b of the outer chamber 9. Such a secondary cooling stage for cooling carbonised water has the advantageous effect that the carbonised water retains better the carbon dioxide that is brought into the water inside the carbonator vessel 11. A better carbonised drink can thus be dispensed.

The water in the carbonator vessel 11 is replenished by fresh water from the water supply via the primary cooling coil 12. The water flowing through the primary cooling coil 12 is cooled by heat exchanging between the fresh water inside the primary cooling coil 12 and the water in the lower part 9a of the outer chamber 9. Cooled fresh water is thus supplied to the carbonator vessel 11, which is advantageous, because it improves and accelerates the carbonisation process. For that reason it is also expedient that the carbonator vessel 11 is disposed within the cooling tank 2.

When non-carbonated water is dispensed from the water dispensing line, the fresh water is only cooled in the primary cooling stage and led through a branch to the non-carbonated water dispensing line.

In order to improve the transfer from thermal energy from the (carbonised) water flowing through the cooling coils 12, 13 to the cooling water, the cooling water is circulated around in the cooling tank 2. By cooling the water and carbonised water in the primary cooling coil 12 and secondary cooling coil 13, thermal energy is transferred to the water in the cooling tank 2. This causes the cooling water to warm up, which in turn causes the ice bank around the evaporator coil 8 to decrease in size. By means of the sensor 14 and the control system the refrigeration system can be operated dependent on the ice bank thickness. The control system can be set up to keep the ice bank at a certain thickness which can be done for example as follows: When the sensor 14 comes into contact with the ice bank it will measure a temperature of approximately 0 °C which can serve as an incentive for the control system to adapt the cooling capacity of the refrigeration system.

The circulation pump 18, which optionally can also be coupled to the control system, causes a circulation of the cooling water in the cooling tank 2 as is illustrated by the flow arrows in the figure. The circulation pump 18 is suitable for overcoming the inherent flow resistence in the cooling tank 2. Through the action of the circulation pump 18 the cooling water rises in the outer chamber 9 and passes the primary cooling coil 12 and secondary cooling coil 13 whereby the cooling water in the outer chamber 9 warms up. At the top end of the outer chamber 9 the cooling water flows through the passage 20 into the inner chamber 10. Because the pump 18 withdraws cooling water at the lower part 10a of the inner chamber, the water flows downward in the inner chamber 10 and passes the evaporator coil 8 with the ice bank which cools the cooling water.

The cooling system 1 is designed such that the ice bank size decreases if a large amount of (carbonised) water flows through the primary and secondary cooling coils 12 and 13 for a longer period, and that the ice bank size increases if the cooling system 1 is less intensly used.

It is to be understood that the present invention is not limited to the particular embodiment illustrated with reference to the drawing and can be practised and carried out in various ways.

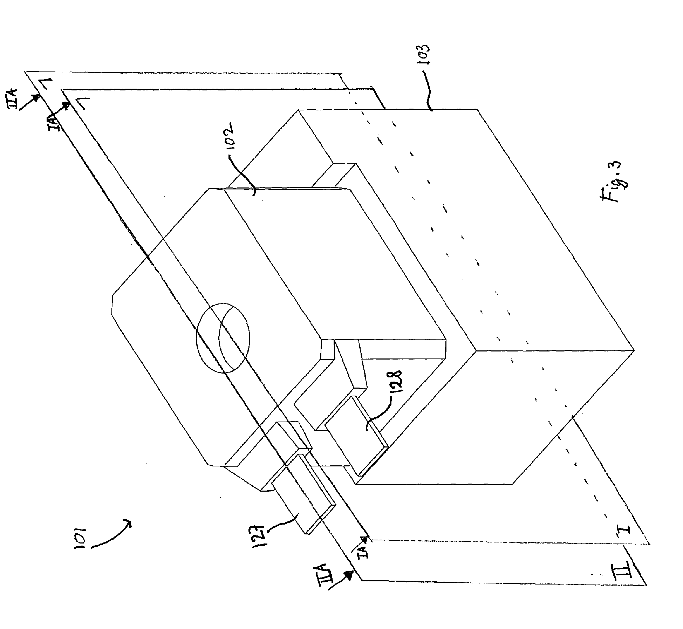

In Fig. 3 is shown a valve assembly 101 according to the second aspect of the invention. The valve assembly 101 has an upper housing 102 and a lower housing 103.

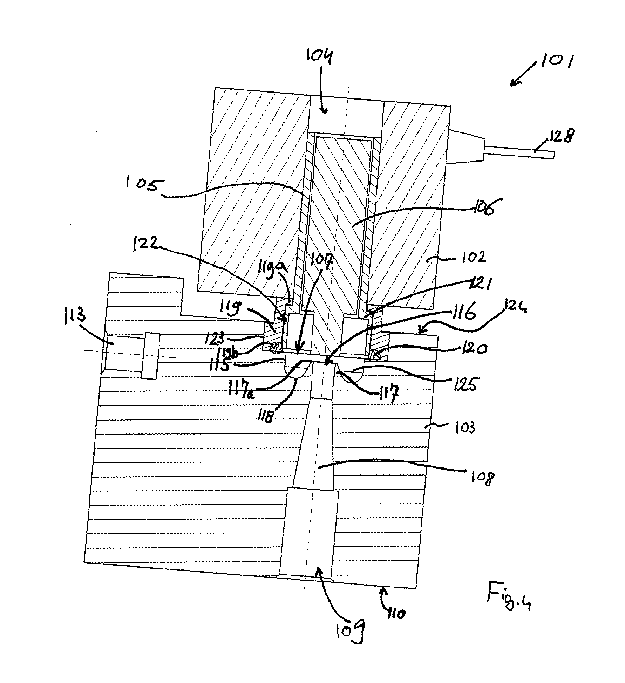

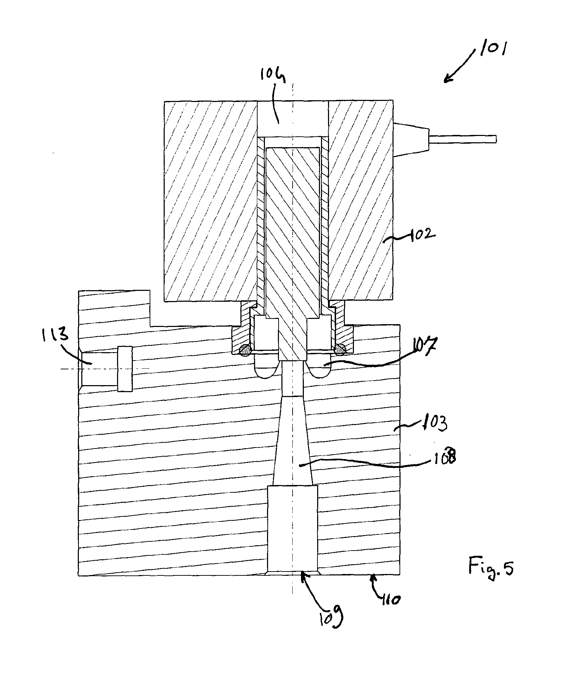

In Figs. 4 and 5 is shown a cross section of the valve assembly 101 according to the cross sectional plane. The direction of the view in Figs. 4 and 5 is indicated in Fig. 3 by arrows IA.

The valve assembly 101 comprises a solenoid valve, in which in the upper housing 102 a bore 104 is provided around which is arranged an electrical coil (not shown). Within the bore 104 is fixedly arranged a guide bushing 105 for guiding a valve body 106 which is concentrically arranged within the bushing 105. The guide bushing 105 has an bushing head 122 that extends outside the bore 104 which part is provided with a collar 121 with a larger outer diameter as the bore 104. The valve body 106 comprises a magnetic or magnetizable material, which can be moved by energizing the electrical coil.

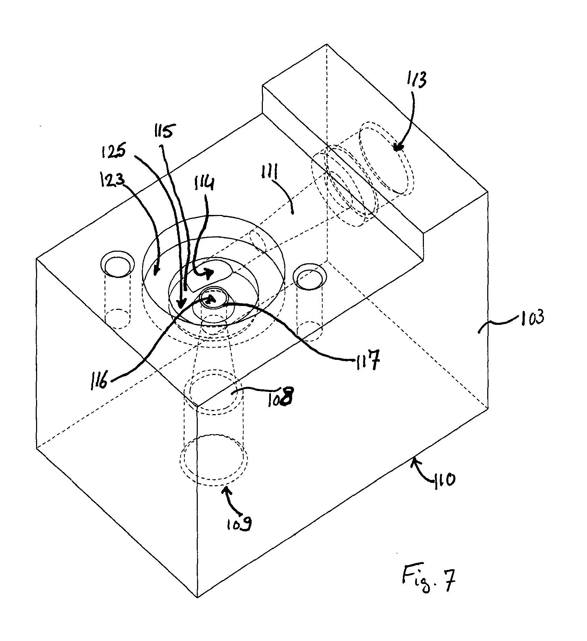

The lower housing 103 is connected with the upper housing 102 by means of a connecting ring 119 which is fixedly attached in a recess 123 in the upper side 124 of the lower housing 103. The connecting ring 119 has at its upper end a radially inwardly extending circumferential flange 119a which engages behind the collar 121 of the bushing head 122. At its lower end the connecting ring 119 has an inwardly facing conical surface 119b. Between the end of the bushing head 122 of the bushing 105 and the conical surface 119b of the connecting ring 119 is clapmed a sealing ring, preferably an O-ring 120. In the bottom of the recess 123 is provided a further lower recess 125 with a circumferential side wall 115 and a bottom 118 as can be seen best in Fig. 7. The lower recess 125 has a ring shape. The space confined by the lower recess 125 and the bushing head 122 constitutes a valve chamber 107.

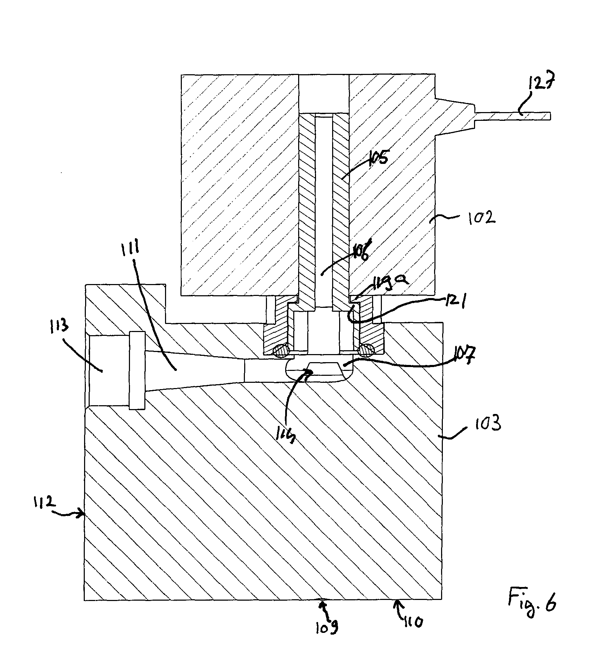

A discharge passage 108 is extending from the lower recess 125 of the valve chamber 107 towards a connection port 109 at the bottom side 110 of the lower housing 103. The discharge passage 108 preferably has a centre line that coincides with the centre line of the bore 104 and the valve chamber 107 as can be best seen in Figs. 4, 5 and 6. The discharge passage 108 opens up in the valve chamber 107 at an outlet opening 116 which is situated in the centre of the lower recess 125 of the valve chamber 107. A ring shaped valve seat member 117 is arranged at the bottom 118. The end surface of the valve seat constitutes a circumferential rim 117a around the outlet opening 116. The outlet opening 116 is thus on an elevated level with respect to the bottom 118 of the valve chamber 107.

Furthermore, a feed passage 111 is extending from a side 112 of the lower housing 103 towards the valve chamber 107. The feed passage 111 has a connection port 113 at the side 112 for connecting a supply line (not shown) of carbonated fluid to the lower housing 103. The feed passage 111 extends transversely with respect to the centre line of the valve chamber 107.

The centre line of the feed passage 111 crosses the centre line of the valve chamber 107 and discharge passage 108, in other words the said centre lines do not intersect. Preferably said centre lines extend perpendicualr with respect to each other. As can be seen best in Fig. 7 the feed passage 111 opens up in the chamber at an inlet opening 114 in a more or less tangential way with respect to the inside of the chamber wall 115. This positioning of the inlet opening 114 establishes that the carbonised fluid entering the valve chamber 107 is flush with the circumferential wall 115 and/or the bottom 118 of the lower recess 125 of the valve chamber 107. The carbonised fluid is thus flowing smoothly along the wall 115 and bottom 118 into the chamber 107 and then guided around along the circumferential wall 115 and bottom 118 circulating around the valve seat 117.

On the upper housing are arranged a connection anchor 127 for connecting with a power supply for the solenoid and a second connection anchor 128 for connecting with a control unit. In use, the valve assembly is operated by means of the control unit.

In a closed state of the valve, as is shown in Fig. 5, the end of the valve body 106 abuts the valve seat 117. The valve chamber 107 is then filled with carbonised fluid.

By operation of the solenoid valve the valve body 106 is lifted from the valve seat 117 such that the carbonised fluid can flow from the valve chamber 107 through the outlet opening 121 into the discharge passage 108. At the same time the valve chamber 107 is refilled by carbonised fluid flowing out of feed passage 111 through the inlet opening 114 into the valve chamber 107. The carbonised fluid is guided along the circumferential wall 115 and the bottom 118 in the lower part of the valve chamber 107 and then rises. Thus a circulating flow is created in the chamber 107 in which above the level of the circumferential rim 117a the fluid can flow into the outlet opening 116 like a sort of vortex. The fluid flow does not run into any obstacle in its circulation path that could disturb the flow. This is expedient for the particular appliction with carbonised fluid because disturbations in the flow can give rise to foaming of the carbonised fluid which results in a degassing of the carbonised fluid.

In Fig. 8 part of a valve assembly according to the prior art is shown. In the figure can be recognised a valve chamber 67 with a discharge passage 68 which opens up in the valve chamber 67 at an outlet opening 65. The outlet opening 65 is surrounded by a valve seat 62. Above the valve seat is arranged a valve body 66 which can be moved by operation means to and from the valve seat 62. In a closed state the sealing surface 66a of the valve body 66 abuts against the valve seat 62 and seals of the outlet opening 65.

Furthemore can be seen a feed passage 61 which opens up in the valve chamber 67 with an inlet opening 62 which is provided in the bottom 69 of the valve chamber 67. As is indicated by flow arrrows this arrangement of the inlet opening 62 results in that the inlet flow runs into the upper side of the valve chamber 67 where it is abruptly deflected which causes wirling and foaming of the carbonised fluid which leads to degassing.

The valve according to the invention can be used in a beverage dispensing machine which is suitable for dispensing carbonised fluid, e.g. carbonised water or soda. In practise when carbonised water is dispensed with the valve assembly 101 according to the invention, the resulting volume percentage CO₂ in the dispensed carbonised water lies about 25% higher than with a valve of Fig.8. The valve assembly 1 according to the invention provides thus for a substantial improvement of the carbonisation degree of the dispensed water when compared with the valve assembly of Fig. 8.

## Claims

1. A fluid cooling system comprising:
- a cooling tank (2) with an outer wall (3) and filled with a heat transfer medium, preferably water;
- an evaporator conduit (8) positioned within the cooling tank (2) for withdrawing heat from the heat transfer medium;
- a primary cooling conduit (12) with an inlet connected to a fluid supply and an outlet, which primary cooling conduit (12) is arranged in the cooling tank (2);
- a carbonator vessel (11) for carbonating fluid, the carbonator vessel (11) having an inlet connected to the outlet of the primary cooling conduit (12) and having an outlet for carbonated fluid;
**characterized in that** the cooling system comprises a secondary cooling conduit (13) having an inlet connected to the outlet of the carbonator vessel (11) and having an outlet connected to dispensing means of carbonated water, which secondary cooling conduit (13) is adapted to cool the carbonated water flowing out from the carbonator vessel (11).

2. The cooling system according to claim 1, wherein the secondary cooling conduit (13) is arranged in the cooling tank (2).

3. The cooling system according to claim 1 or 2, wherein the carbonator vessel (11) is arranged in the cooling tank (2).

4. The cooling system according to any of the preceding claims, wherein the heat transfer medium in the cooling tank (2) comprises water and the evaporator conduit (8) is adapted to create an ice bank in the cooling tank (2).

5. The cooling system according to any of the above claims, wherein a circulation means (18) is provided for circulating the heat transfer medium through the cooling tank (2).

6. The cooling system according to claim 5, wherein the circulation means comprises a circulation pump (18).

7. The cooling system according to any of the preceding claims, wherein the evaporator conduit (8) is shaped as a coil and the primary cooling conduit (12) is shaped as a coil, which evaporator coil and primary cooling coil are arranged concentric with respect to each other.

8. The cooling system according to claim 7, wherein the evaporator coil (8) is positioned within the primary cooling coil (12).

9. The cooling system according to claim 7 or 8, wherein the carbonator vessel (11) is arranged in the cooling tank (2) above the evaporator coil (8) and the primary cooling coil (12).

10. The cooling system according to claim 3 or 9, wherein the secondary conduit (13) is a cooling coil, which extends around the carbonator vessel (11).

11. The cooling system according to any of the above claims, wherein the outer wall of the cooling tank (2) comprises a thermal insulation layer (5).

12. The cooling system according to any of the preceding claims, wherein the cooling tank (2) comprises at least two chambers (9, 10) separated by a separation wall (7), which chambers (9, 10) are in fluid communication with each other.

13. The cooling system according to claim 12, wherein an inner chamber (10) and an outer chamber (9) are arranged concentrically with respect to each other and separated by a substantially tubular separation wall (7) which is placed in an upright fashion in the cooling tank (2).

14. The cooling system according to claim 13, wherein the evaporator conduit (8) is disposed within the inner chamber (10).

15. The cooling system according to claim 13 or 14, wherein the primary cooling conduit (12) is disposed within the outer chamber (9).

16. The cooling system according to any of the claims 13-15, wherein the secondary cooling conduit (13) is disposed within the outer chamber (9).

17. The cooling system according to any of the claims 13-16, wherein the carbonator vessel (11) is disposed within the inner chamber (10).

18. The cooling system according to any of the claims 13-17, wherein an upper passage (20) and a lower passage is provided between the inner chamber (10) and the outer chamber (9) to allow the circulation of the heat transfer fluid between said chambers (9, 10).

19. The cooling system according to claim 6 and any of the claims 13-18, wherein the circulation pump (18) is arranged such that it pumps heat transfer fluid upwardly from a lower region (9a) in the outer chamber (9).

20. The cooling system according to any of the above claims, wherein the primary cooling conduit (12) has a branch which is connected to a dispensing line for cooled fluid.

21. The cooling system according to claim 4, wherein an icebank sensor (14) is provided at a distance from the evaporator conduit (8) for measuring the thickness of the ice bank.

22. Beverage dispensing machine comprising a cooling system according to any of the preceding claims.

23. Valve assembly for dispensing a carbonated fluid, comprising a valve chamber with an inlet opening associated with a fluid feed passage, and with an outlet opening associated with a fluid discharge passage, a valve seat around the outlet opening, and a valve body moveable between an opened position in which it is spaced from the valve seat and a closed position in which it cooperates with the valve seat so as to seal off the outlet opening, **characterized in that** the valve chamber has a round circumferential chamber wall, in which the inlet opening is arranged in a flush manner such that in operation a flow of fluid enters the valve chamber substantially tangential with respect to the inside of said chamber wall.

24. Valve assembly according to claim 23, wherein the outlet opening is arranged with respect to the inlet opening in such a manner that the main direction of the fluid flow out of the valve chamber is transverse with respect to the main direction fluid flow into the valve chamber.

25. Valve assembly according to claim 23 or 24, wherein the chamber wall has a bottom which extends transversely with respect to the chamber wall, wherein the outlet opening is arranged at the bottom.

26. Valve assembly according to claim 25, wherein the outlet opening is arranged at the centre of the bottom.

27. Valve assembly according to claim 25 or 26, wherein the valve seat comprises a ring shaped member which is arranged on the bottom, such that the outlet opening is at a higher level than the bottom.

28. Valve assembly according to any of the claims 23-27, wherein the circumferential chamber wall has a circular shape.

29. Valve assembly according to any of the claims 23-28, wherein the valve body is shaped as a rod which is at least partly extending inside the valve chamber aligned with the outlet opening, such that it can be moved axially from and to the valve seat.

30. Valve assembly acording to any of the claims 23-29, wherein the valve assembly comprises electro-magnetical means for moving the valve body between the opened position and the closed position.

31. Valve assembly according to any of the claims 23-30, wherein the discharge channel extends in line with the outlet opening.

32. Beverage dispensing machine provided with a valve assembly according to any of the claims 23-31.

33. Beverage dispensing machine according to claim 32 comprising a cooling system according to any of the claims 1-21.
